# Europäisches Patentamt
# European Patent Office
# Office européen des brevets

(19)

(11) Veröffentlichungsnummer : **0 542 817 B1**

(12)
# EUROPÄISCHE PATENTSCHRIFT

(45) Veröffentlichungstag der Patentschrift :
**05.07.95 Patentblatt 95/27**

(51) Int. Cl.$^6$ : **H02M 1/00**, H02M 3/335, H02M 3/155

(21) Anmeldenummer : **91914233.1**

(22) Anmeldetag : **01.08.91**

(86) Internationale Anmeldenummer :
**PCT/EP91/01448**

(87) Internationale Veröffentlichungsnummer :
**WO 92/02983 20.02.92 Gazette 92/05**

(54) **NETZBETRIEBENE PHASENANSCHNITT-STEUERSCHALTUNG.**

(30) Priorität : **10.08.90 DE 4025322**

(43) Veröffentlichungstag der Anmeldung :
**26.05.93 Patentblatt 93/21**

(45) Bekanntmachung des Hinweises auf die
Patenterteilung :
**05.07.95 Patentblatt 95/27**

(84) Benannte Vertragsstaaten :
**DE ES FR GB IT**

(56) Entgegenhaltungen :
**DE-A- 3 622 986
FR-A- 2 472 297**

(56) Entgegenhaltungen :
**IEEE TRANSACTIONS ON AEROSPACE AND
ELECTRONIC SYSTEMS, Bd. 24, Nr. 6, November 1988, NEW YORK, Seiten 800 - 807; GALATEANU: "Buck-Flyback DC-DC Converter"
PATENT ABSTRACTS OF JAPAN, Bd. 7, Nr.
247 (E-208)(1392), 2. November 1983; & JP-A-58 133 173**

(73) Patentinhaber : **DEUTSCHE
THOMSON-BRANDT GMBH
Hermann-Schwer-Strasse 3
D-78048 Villingen-Schwenningen (DE)**

(72) Erfinder : **RILLY, Gerard
Panoramaweg 6
D-7731 Unterkirnach (DE)**
Erfinder : **MORIZOT, Gerhard
Kopfbühl 56
D-7730 Villingen (DE)**

EP 0 542 817 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer netzbetriebenen Phasenanschnitt-Steuerschaltung gemäß dem Oberbegriff des Anspruch 1.

Bei einer bekannten Schaltung dieser Art ist an den Ausgang des Neztgleichrichters die Reihenschaltung einer Induktivität und eines als Schalter wirkenden Transistors angeschlossen, wobei der Mittelpunkt der Reihenschaltung über eine Diode mit einem Ladekondensator verbunden ist. Der Ladekondensator liefert die über eine Phasenanschnitt-Steuerschaltung stabilisierte Betriebsspannung. Eine derartige Phasenanschnittschaltung hat den Vorteil, daß durch den Schalterbetrieb die Verlustleistung innerhalb der Schaltung gering ist und die erzeugte Betriebsspannung durch Änderung des Phasenanschnittwinkels in weiten Grenzen geändert werden kann. Die beschriebene bekannte Schaltung wird auch als "step-up"-Schaltung bezeichnet. Eine derartige Schaltung ist bekannt durch "IEEE TRANSACTIONS ON AEROSPACE AND ELECTRONIC SYSTEMS", Bd. 24, Nr. 6, November 1988, New York Seiten 800 - 807.

Derartige Schaltung mit Phasenanschnitt erzeugen in dem vom Netz entnommenen Strom Oberwellen, die unerwünscht sind und Störungen bewirken können. Es ergeben sich daher Forderungen an die maximalen Amplituden der Oberwellen in dem vom Netz entnommenen Strom. Nach neuesten Anforderungen ist die maximal zulässige Amplitude der Oberwellen abhängig von der dem Netz entnommenen Leistung im Leistungsbereich unterhalb 300 Watt.

Der Erfindung liegt die Aufgabe zugrunde, die beschriebene bekannte Schaltung ohne großen Mehraufwand so weiterzubilden, daß die Amplitude der Oberwellen in dem dem Netz entnommenen Strom verringert wird.

Diese Aufgabe wird durch die im Anspruch 1 angegebene Erfindung gelöst. Vorteilhafte Weiterbildungen der Erfindung sind in den Unteransprüchen angegeben.

Die erfindungsgemäße Schaltung ist eine vorteilhafte und schaltungstechnisch einfache Kombination der bekannten "step-up"-Schaltung mit einem Schaltnetzteil. Dabei erfüllt der als Schalter wirkende Transistor gleichzeitig zwei Aufgaben. Einmal dient der Transistor als Schalter für die bekannte step-up-Schaltung. Zusätzlich dient der Transistor als elektronischer Leistungsschalter für das mit der step-up-Schaltung kombinierte Schaltnetzteil. Es wird also für beide in der Gesamtschaltung wirksamen Funktionen derselbe Schalter in Form eines Transistors verwendet.

Ein Ausführungsbeispiel der Erfindung wird anhand der Zeichnung erläutert. Darin zeigen

Fig. 1 ein detailliertes Schaltbild der Erfindung und

Fig. 2 den Verlauf einer in Fig. 1 auftretenden Spannung.

Die in der Beschreibung und der Zeichnung verwendeten Symbole haben folgende Bedeutung.

Ci Kondensator kleiner Kapazität von ca 5 μF

Cb Elektrolytkondensator großer Kapazität von ca 150 μF

La Induktivität von ca 1 mH

D1 Diode vom Typ BYT 13-600

D2 Diode vom Typ BYT 13-600

T1 als Schalter dienender Leistungstransistor vom Typ BUV 56

td leitende Zeit der Diode D2

ton leitende Zeit von T1

imains dem Netz entnommener Strom

Umains Netzspannung

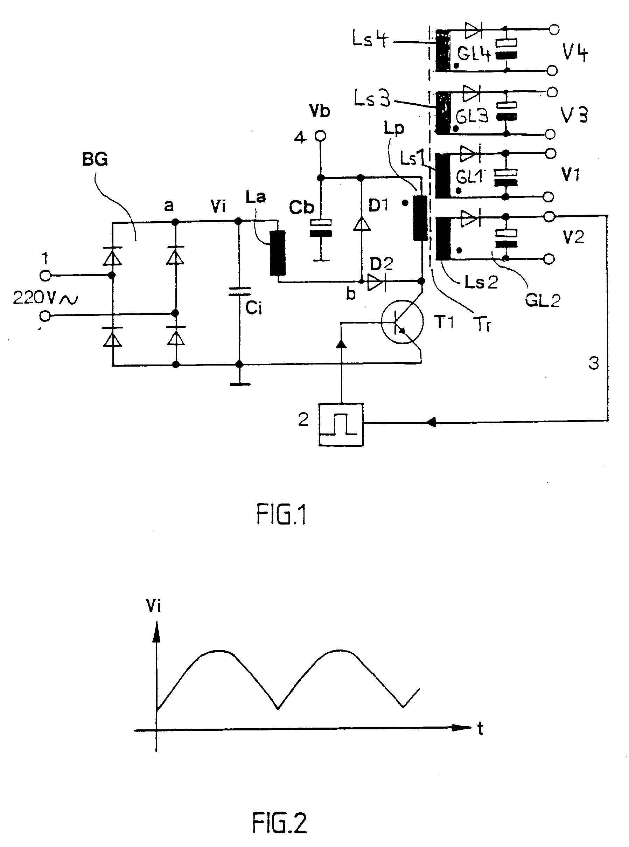

In Fig. 1 ist an die Netzklemmen 1 der Netzbrückengleichrichter BG angeschlossen. An den Ausgang a ist der Kondensator Ci angeschlossen. Ci hat eine relativ kleine Kapazität von 5 μF. Er dient nur zur HF-Unterdrückung und bewirkt keine nennenswerte Siebung für die Netzspannung von 50 Hz. An den Ausgang a ist die Induktivität La angeschlossen, deren anderes Ende über die Diode D1 an den Ladekondensator Cb angeschlossen ist. Cb ist ein Elektrolytkondensator und hat eine große Kapazität von ca 150 μF. Der Mittelpunkt b der Reihenschaltung La/D1 ist über die Diode D2 mit dem Kollektor des Transistors T1 verbunden. Der Kollektor ist außerdem über die Primärwicklung Lp des Transformators Tr mit dem Ladekondensator Cb verbunden. T1 und Lp bilden ein Schaltnetzteil. Der Transformator Tr enthält zwei Sekundärwicklungen Ls1 und Ls2, die über Gleichrichter GL1 und GL2 zwei Betriebs-Gleichspannungen V1,V2 liefern.

Der Transistor T1 wird von der Steuerschaltung 2 im Sinne einer Phasenanschnittsteuerung periodisch leitend und nichtleitend gesteuert. Die Steuerschaltung 2 ist über die Leitung 3 von der Sekundärwicklung Ls2 synchronisiert. Der als Schalter wirkende Transistor T1 wirkt einerseits als Schalter für die bekannte step-up-Schaltung, die nur die Bauteile La,T1,D1 und Cb enthalten würde. Der Transistor T1 wirkt außerdem als elektronischer Leistungsschalter für das mit der step-up-Schaltung kombinierte Schaltnetzteil mit dem Schaltnetzteil-Transformator Tr.

2

Während der leitenden Zeit des Transistors T1 speichert die Induktivität La eine Energie, die dem Quadrat der Eingangsspannung proportional ist. Diese Energie wird über die Diode D1 auf den Ladekondensator Cb übertragen. Der Ladekondensator Cb hat eine so große Kapazität, daß er die Ausgangsspannung des Gleichrichters BG glättet und an der Klemme 4 eine reine Gleichspannung Vb entsteht.

Die Spannung Vb ist größer als die Spitzenspannung des Netzgleichrichters und abhängig von der leitenden Zeit des Transistors T1. Dabei gilt:

$$Vb = Vi * (ton + td)/td.$$

Der Kondensator Cb, der Transformator Tr und der Transistor T1 bilden ein Schaltnetzteil mit Rücklaufgleichrichtung. Im normalen stationären Betrieb ändert sich die leitende Zeit ton des Transistors T1 langsam entsprechend der Ladung der Sekundärwicklungen. Die Zeit ton ist indessen weitestgehend konstant während einer halben Periodendauer und abhängig von der übertragenen Leistung. Die Induktivität La muß ausreichend gering bemessen sein, und zwar derart, daß sie während der Sperrzeit des Transistors T1 vollständig entladen werden kann. Der Strom durch die Induktivität La ist somit annähernd linear abhängig von der Zeit ton, d.h. von der Leistung, die über den Transformator Tr übertragen wird. Andererseits ist die Zeit ton während einer halben Anschnittperiode weitestgehend konstant. Daher ist der die Induktivität La durchfließende mittlere Strom annähernd proportional zu der Spannung Vi.

Der Kondensator Ci ist so klein bemessen, daß er lediglich eine Filterwirkung für Hochfrequenzen bewirkt. Daraus ergibt sich, daß die Spannung Vi etwa gleich der gleichgerichteten Netzspannung ist, also eine sogenannte pulsierende Gleichspannung gemäß Fig. 2 darstellt. Der Strom durch die Induktivität La ist somit im wesentlichen gleich dem von dem Gleichrichter BG gelieferten Strom und daher weitestgehend sinusförmig. Wenn die Arbeitsfrequenz des Transistors T1 festliegt und die Einschaltzeit ton konstant ist, ist der von dem Gleichrichter BG gelieferte Strom theoretisch nicht ganz sinusförmig. Der Strom enthält vielmehr Harmonische, deren Amplituden relativ gering sind und innerhalb der zulässigen Toleranzen liegen.

Fig. 2 zeigt, daß die Spannung Vi am Kondensator Ci durch einen entsprechend kleinen Kondensator Ci praktisch nicht gesiebt ist, also eine sogenannte pulsierende Gleichspannung aus Sinushalbwellen darstellt. Der relativ kleine Kondensator Ci dient nur zur Unterdrückung von HF-Spannungen. Er wirkt zusammen mit der Induktivität La als Tiefpaß und verhindert, daß HF-Spannungen auf das Netz gelangen. Der kleine Kondensator Ci trägt außerdem dazu bei, daß die die Amplituden der Oberwellen des dem Netz entnommenen Stromes gering bleiben. Außerdem ist ein kleiner Kondensator billiger als ein sonst als Ladekondensator verwendeter Elektrolytkondensator mit einer hohen Kapazität von ca 100 µF.

Wesentlich ist, daß das Schaltnetzteil mit dem Transistor T1 und dem Transformator Tr nach dem Prinzip des Sperrwandlers mit Rücklaufgleichrichtung arbeitet. Das bedeutet, daß die Gleichrichter GL dann leitend sind und Energie in die Kondensatoren übertragen, wenn der Transistor T1 gesperrt ist. Die Rücklauflgleichrichtung wird durch besondere Polung der Sekundärwicklungen Ls und der angeschlossenen Gleichrichter GL erreicht. Die Polung der Wicklungen für Rücklaufgleichrichtung ist in Fig. 1 durch die Punkte an den einzelnen Wicklungen angedeutet.

Zur Erzeugung weiterer Sekundärspannungen V3 und V4 enthält der Transformator Tr zwei weitere Gleichrichter GL3 und GL4, die von weiteren Sekundärwicklungen Ls3 und Ls4 gespeist werden. Ein Vorteil der Schaltung besteht noch darin, daß sich die Spannung an dem Kondensator Cb in weiten Grenzen von etwa 50 % - 100 % ändern kann.


## Patentansprüche

1. Netzbetriebene Phasenanschnitt-Steuerschaltung mit einem Netzgleichrichter, an dessen Ausgang die Reihenschaltung einer Induktivität (La) und eines periodisch betätigten Schalttransistors (T1) angeschlossen ist, wobei der Mittelpunkt (b) der Reihenschaltung über eine erste Diode (D1) an einen Ladekondensator (Cb) und außerdem an den Ladekondensator (Cb) ein nach dem Sperrwandlerprinzip mit Rücklaufgleichrichtung arbeitendes Schaltnetzteil mit Transformator (Tr) angeschlossen ist, **dadurch gekennzeichnet**, daß zwischen dem Mittelpunkt (b) und dem Schalttransistor (T1) eine zweite, gleichsinnig mit der Kollektor/Emitter-Strecke des Schalttransistors (T1) gepolte Diode (D2) liegt und der Schalttransistor (T1) über die Primärwicklung (Lp) des Transformators (Tr) des Schaltnetzteils mit dem Ladekondensator (Cb) verbunden ist.

2. Schaltung nach Anspruch 1, **dadurch gekennzeichnet,** daß an den Ausgang (a) des Netzgleichrichters (BG) nur ein kleiner Kondensator (Ci) zur HF-Unterdrückung angeschlossen ist, der keine wesentliche Siebung der Netzspannung bewirkt.

3. Schaltung nach Anspruch 1, **dadurch gekennzeichnet,** daß der Transformator (Tr) mehrere Sekundärwicklungen (Ls1, Ls2) und daran angeschlossene Gleichrichter (GL1, GL2) zur Erzeugung von Betriebsspannungen (V1, V2) aufweist.

4. Schaltung nach Anspruch 1, **dadurch gekennzeichnet,** daß der Wert der Induktivität (La) kleiner ist als die Induktivität der Primärwicklung (Lp) des Transformators (Tr).

## Claims

1. A mains operated phase-control circuit with a mains rectifier, connected to the output of which is the serial connection of an inductance (La) and a periodically operated switching transistor (T1), in which the middle point (b) of the serial connection is connected via a first diode (D1) to a charging capacitor (Cb), and to the charging capacitor (Cb) there is connected a switch mode power supply with a transformer (Tr) and operating according to the blocking oscillator principle with reverse rectifying, characterised in that a second diode (D2) is located between the middle point (b) and the switch (T1) and is poled in the same sense as the collector/emitter path of the switching transistor (T1) and the switching transistor (T1) is connected via the primary winding (Lp) of the transformer (Tr) of the switch mode power supply to the charging capacitor (Cb).

2. A circuit according to claim 1, characterized in that only one relatively small capacitor (Ci) for RF suppression, effecting no significant filtering of the mains voltage, is connected to the output (a) of the mains rectifier (BG).

3. A circuit according to claim 1, characterised in that the transformer (Tr) comprises a plurality of secondary windings (Ls1, Ls2) and rectifiers (GL1, GL2) connected thereto for generating operating voltages (V1, V2).

4. A circuit according to claim 1, characterised in that the value of the inductance (La) is less than the inductance of the primary winding (Lp) of the transformer (Tr).

## Revendications

1. Circuit de commande par réglage de phase fonctionnant sur secteur doté d'un redresseur de secteur qui comporte à sa sortie le montage en série d'une inductance (La) et d'un transistor de commutation (T1) actionné périodiquement, sachant que le centre (b) du montage en série est raccordé à un condensateur de lissage (Cb) par l'intermédiaire d'une première diode (D1) et qu'un bloc secteur de commutation muni d'un transformateur (Tr) et fonctionnant selon le principe du convertisseur à oscillateur bloqué est également raccordé au condensateur de lissage (Cb), caractérisé par le fait qu'une deuxième diode (D2) polarisée dans le même sens que la liaison collecteur/émetteur du transistor de commutation (T1) est située entre le centre (b) et le transistor de commutation (T1), et que le transistor de commutation (T1) est relié au condensateur de lissage (Cb) par l'intermédiaire de l'enroulement du circuit primaire (Lp) du transformateur (Tr).

2. Circuit selon la la revendication 1, caractérisé par le fait qu'un condensateur (Ci) de faible capacité seulement est raccordé à la sortie (a) du redresseur (BG) ayant pour but la suppression HF et ne provoquant pas de filtrage notable de la tension de service.

3. Circuit selon la revendication 1, caractérisé par le fait que le transformateur (Tr) comporte plusieurs enroulements du circuit secondaire (Ls1, Ls2) et des redresseurs raccordés à ces derniers (GL1, GL2) pour engendrer des tensions de service (V1, V2).

4. Circuit selon la revendication 1, caractérisé par le fait que la valeur de l'inductance (La) est plus petite que l'inductance de l'enroulement du circuit primaire (Lp) du transformateur (Tr).

FIG.1

FIG.2